## Europäisches Patentamt

## European Patent Office

## Office européen des brevets

(19)

(11) Veröffentlichungsnummer: **0 158 706**
**B1**

(12) **EUROPÄISCHE PATENTSCHRIFT**

(45) Veröffentlichungstag der Patentschrift:
**05.10.88**

(51) Int. Cl.⁴: **F 41 D 10/02**, F 41 D 10/36

(21) Anmeldenummer: **84110001.9**

(22) Anmeldetag: **22.08.84**

(54) **Lagerung eines Gurtzuführer-Antriebsritzels einer Gasdrucklader-Rohrwaffe.**

(30) Priorität: **14.10.83 DE 3337424**

(43) Veröffentlichungstag der Anmeldung:
**23.10.85 Patentblatt 85/43**

(45) Bekanntmachung des Hinweises auf die Patenterteilung:
**05.10.88 Patentblatt 88/40**

(84) Benannte Vertragsstaaten:
**CH DE FR LI**

(56) Entgegenhaltungen:
**DE - A - 2 730 184**
**DE - B - 2 838 768**
**FR - A - 2 394 706**

(73) Patentinhaber: **Rheinmetall GmbH,**
**Ulmenstrasse 125 Postfach 6609, D-4000 Düsseldorf
(DE)**

(72) Erfinder: **Frye, Günter, Matthias-Claudius-Strasse 1d,
D-4006 Erkrath (DE)**

(74) Vertreter: **Behrens, Ralf Holger, Dipl.-Phys., in Firma
Rheinmetall GmbH Ulmenstrasse 125 Postfach 6609,
D-4000 Düsseldorf 1 (DE)**

ACTORUM AG

## Beschreibung

Die Erfindung betrifft eine Lagerung eines Gurtzuführer-Antriebsritzels nach dem Oberbegriff des Patentanspruchs 1.

Bei bisher bekannten Gurtzuführern dieser Art ist das Antriebsritzel in einer vorderen und in einer hinteren Lagerstelle ohne zusätzliche Lagerelemente direkt in dem Gurtzuführergehäuse gelagert, wobei das vordere Lager auch in einem an das Gehäuse anschraubbaren Gehäusedeckel angeordnet sein kann. Um den Munitionstransport durchführen zu können, wird bei jedem Schuss das Antriebsritzel von einem gasdruckbeaufschlagten Kolben um ca. 60° gedreht und nach erfolgtem Munitionstransport über eine Rückstellfeder wieder in die Ausgangsposition zurückbewegt.

Bei einer derartigen Lagerung können unter einer hohen Belastung, beispielsweise bei einer Kadenz von ca. 1000 1/min., an den gleichen dauernd hochbelasteten Teilbereichen durch die innerhalb des gleichen Winkelbereichs jeweils sich stets wiederholenden vor- und zurückdrehenden Schwenkbewegungen Verschleissmarkierungen auftreten, wodurch die Rohrwaffe nachteilig in ihrer Funktion gestört werden kann.

Die Beseitigung der Verschleissmarkierungen erfordert zusätzlich einen hohen Arbeitsaufwand, wobei es aufgrund durchzuführender Nacharbeiten an den Gehäuselagerflächen notwendig sein kann, das Antriebsritzel ganz zu erneuern.

Aus der DE-A 2 838 768 ist eine Lagerbuchse bekannt, die jedoch für den Einsatz hochtouriger Maschinen vorgesehen ist, wobei die Buchsenwand zur Bildung eines Mehrflächengleitlagers den Freiraum zwischen einer Antriebswelle und der Bohrung eines Lagergehäuses in Schmiermittel gefüllte Räume teilt. Durch eine polygonartige Ausbildung der Buchsenwand wird die Welle stets an drei gleichen Berührungsstellen der Buchse getragen, an denen somit beim Anfahren und Bremsen der Antriebswelle ein erhöhter Verschleiss auftreten wird. Des weiteren sind an der Buchse Bohrungen zum Zuführen des Schmiermittels notwendig, die jedoch zur Bildung eines keilförmigen Flüssigkeitsfilmes exzentrisch angeordnet sein müssen. Dadurch kann diese Buchse bei höheren Drehzahlen der Welle verschleissarm nur in einer bestimmten Drehrichtung der Welle betrieben werden. Der Einsatz einer derartigen Buchse zur Lagerung einer sich stets wiederholenden vor- und zurückgehenden Schwenkbewegung einer Welle würde durch den Schmierstoffmangel bei der Rückbewegung zu einem vorzeitigen Ausfall der Büchse führen.

Der Erfindung liegt die Aufgabe zugrunde, für das im Oberbegriff des Patentanspruchs 1 genannte Gurtzuführer-Antriebsritzel eine Lagerung zu schaffen, die unter Dauerbelastung eine störungsfreie Einsatzbereitschaft und eine hohe Haltbarkeit bei sich stets wiederholenden vor- und zurückdrehenden Schwenkbewegungen gewährleistet sowie Verschleissmarkierungen an dem Antriebsritzel und an dem Gehäuselager verhindert.

Diese Aufgabe wird durch die im Patentanspruch 1 angegebene Erfindung gelöst. Vorteilhafte Ausgestaltungen und Weiterbildungen gehen aus den Unteransprüchen hervor.

Der Zwischenring der jeweiligen Lagerstelle zeichnet sich vorteilhaft dadurch aus, dass er bei der Vor- bzw. Rückdrehung des Antriebsritzels zwischen der Gehäuselagerfläche und dem Lagerzapfen des Antriebsritzels durchrutschend Relativbewegungen in Umfangsrichtung ausführen kann, wodurch insbesondere hohe wiederkehrende Belastungen an stets gleichen Bereichen des Lagerringes und ein direkter Kontakt des Lagerzapfens mit der Gehäuselagerfläche verhindert werden.

Durch eine variierbare und eine hohe Härte aufweisende beidseitige Oberflächenbeschichtung des Lagerringes und durch die Eigenschaft, sich bei radial hoher Belastung während der Drehbewegung an die Gehäuselagerfläche anzulegen und bei Entlastung in die Ausgangsform elastisch zurückfedern zu können, wird bei einer relativ harten Gehäuselagerfläche und einem vorzugsweise vergüteten Lagerzapfen nicht nur ein Zwischenring mit hoher Dauerhaltbarkeit geschaffen, sondern auch vor allem ein Verschleiss an der Gehäuselagerfläche verhindert, so dass eine besonders aufwendige Nacharbeit, wie sie bei einer beschädigten Gehäuselagerfläche notwendig wäre, entfallen kann.

Weiter vorteilhaft ist es möglich, ohne den Werkstoff des Antriebsritzels ändern zu müssen, den Werkstoff des Gehäuselagers zu variieren.

Die Erfindung wird anhand eines in den Zeichnungen dargestellten Ausführungsbeispieles des näheren erläutert.

Es zeigt:

Fig. 1 in einer teilweise geschnittenen Darstellung das vordere Ende eines Gurtzuführers mit einer Lagerung des Antriebsritzels innerhalb des Gurtzuführergehäuses;

Fig. 2 eine vergrösserte Schnittdarstellung der vorderen Lagerstelle gem. der in Fig. 1 gekennzeichneten Einzelheit X.

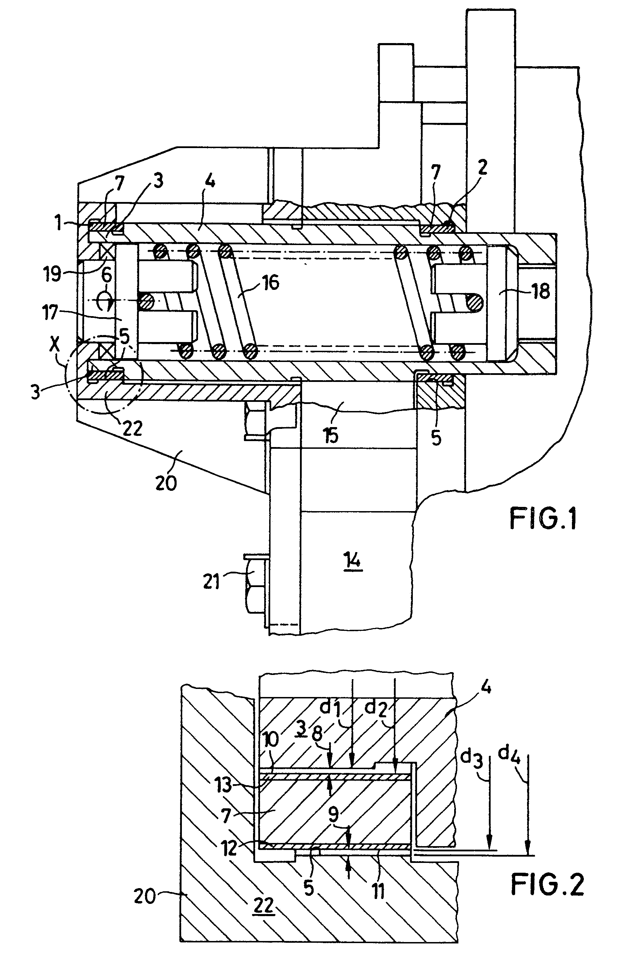

Fig. 1 verdeutlicht die Lagerung eines Antriebsritzels 4 innerhalb einer vorderen 1 und einer hinteren 2, in einem Gurtzuführergehäuse 14 angeordneten Lagerstelle 1, 2. Vor der hinteren Lagerstelle 2 ist auf dem Antriebsritzel 4 ein Zahnsegment 15 angeordnet und formschlüssig mit ihm verbunden. Innerhalb des Antriebsritzels 4 ist eine Rückstellfeder 16 in einem vorderen 17 und einem hinteren 18 Federwiderlager 17, 18 gelagert, wobei das vordere Federlager 17 über eine Kupplung 19 mit dem Antriebsritzel 4 verbunden ist. Über einen nicht dargestellten gasdruckbeaufschlagten Kolben wird bei Schussabgabe das Antriebsritzel 4 gedreht, so dass über das Zahnsegment 15 und den weiter nicht dargestellten Gurtzuführerantrieb die Gurtzufuhr erfolgen kann. Während des Gurttransportes wird die Rückstellfeder 16 gespannt, so dass nach beendigtem Gurttransport das Antriebsritzel 4 durch die Rückstellfeder 16 wieder in die Ausgangsposition zurückdrehbar ist.

Die vordere Lagerstelle 1 befindet sich innerhalb eines durch Befestigungsmittel 21 lösbaren Gehäusedeckels 20. Der Gehäusedeckel 20 umfasst aussen, vorn und teilweise innen die Lagerstelle 1, wobei der äussere Bereich 22 des Gehäusedeckels 20 eine Gehäuselagerfläche 5 für die Aufnahme eines Zwischenringes 7 aufweist, auf dessen Innenseite ein Lagerzapfen 3 des Antriebsritzels 4 gelagert ist. Der Lagerring 7 ist seitlich durch den Ansatz des Lagerzapfens 3 und durch den Gehäusedeckel 20 gegen Verschieben fixiert. Die genaue Anordnung des Lagerringes 7 innerhalb der Lagerstellen 1, 2 verdeutlicht Fig. 2.

Der Lagerring 7 weist zwischen seinem Innendurchmesser $d_2$ und dem Durchmesser $d_1$ des Lagerzapfens 3 und zwischen dem Aussendurchmesser $d_3$ des Zwischenringes 7 und dem Durchmesser $d_4$ der Gehäuselagerfläche 5 jeweils ein radiales Spiel 8, 9 auf, wodurch der Zwischenring 7 während einer Drehbewegung des Antriebsritzels 4 in Umfangsrichtung 6, insbesondere bei der Rückdrehung des Antriebsritzels 4 durchrutschend eine Relativbewegung durchführen kann. Durch die hohe Anfangsbelastung bei Schussabgabe kann sich der Zwischenring 7 elastisch verformen und sich an die Gehäuselagerfläche 5 anlegen. Nach Entlastung federt der Zwischenring 7 sofort wieder zurück, so dass der Drehbereich, in dem bei gleichzeitiger Drehbewegung eine hohe Reibung stattfindet, äusserst gering bleibt, weil auch die Lage des Zwischenringes 7 durch die Relativverschiebung nach jedem Schuss veränderbar ist. Durch eine Oberflächenbeschichtung des aus Stahl bestehenden Zwischenringes 7 auf der inneren 10 und der äusseren 11 Lagerfläche 10, 11, wobei die Oberflächenbeschichtung aus dünnschichtigen, harten und verschleissfesten Zonen 12, 13 besteht, wird ein extrem verschleissfester Zwischenring geschaffen, der auch für die Aufnahme hoher Druckbelastungen geeignet ist. Die Zonen 12, 13 des Zwischenringes 7 bestehen dabei bevorzugt aus gas- der plasmanitrierten Schichten.

Die Bildung verchromter, vernickelter oder ähnlich harter Zonen ist auch möglich.

Der Einsatz des Zwischenringes 7 gestattet es weiter vorteilhaft, den Wirkstoff des Gehäuselagers zu variieren, wobei der Wirkstoff des Gurtzuführergehäuses 14 beispielsweise gegenüber dem des Gehäusedeckels 20 unterschiedlich sein kann. In allen Fällen kann jedoch die Oberfläche des Lagerzapfens 3 gegenüber der Gehäuselagerfläche 5 eine geringere Härte aufweisen, so dass der Grundwerkstoff des Antriebsritzels 4 an der Lagerstelle 1, 2 nicht zusätzlich gehärtet oder beschichtet werden muss.

Je nach der Belastung ist es auch möglich, das Antriebsritzel 4 mit nur einer einen Zwischenring 7 aufweisenden Lagerstelle 1 auszurüsten.

Bezugszeichenliste
1 Lagerstelle vorn
2 Lagerstelle hinten
3 Lagerzapfen
4 Antriebsritzel
5 Gehäuselagerfläche
6 Umfangsrichtung
7 Zwischenring
8 Spiel
9 Spiel
10 Lagerfläche
11 Lagerfläche
12 Zone
13 Zone
14 Gurtzuführergehäuse
15 Zahnsegment
16 Rückstellfeder
17 Federwiderlager vorn
18 Federwiderlager hinten
19 Kupplung
20 Gehäusedeckel
21 Befestigungsmittel
22 Bereich
$d_1$ Durchmesser
$d_2$ Innendurchmesser
$d_3$ Aussendurchmesser
$d_4$ Durchmesser

## Patentansprüche

1. Lagerung eines Gurtzuführer-Antriebsritzels einer automatischen Gasdrucklader-Rohrwaffe mit einer vorderen (1) und einer hinteren (2), in dem Gurtzuführergehäuse (14) angeordneten Lagerstelle (1, 2), dadurch gekennzeichnet, dass wenigstens eine Lagerstelle (1, 2) zwischen einem Lagerzapfen (3) des Antriebsritzels (4) und einer Gehäuselagerfläche (5) einen in Umfangsrichtung (6) durchrutschenden Zwischenring (7) enthält, wobei zwischen dem Innendurchmesser $d_2$ des Zwischenringes (7) und dem Durchmesser $d_1$ des Lagerzapfens (3) und zwischen dem Aussendurchmesser $d_3$ des Zwischenringes (7) und dem Durchmesser $d_4$ der Gehäuselagerfläche (5) jeweils ein radiales Spiel (8, 9) vorhanden ist sowie der Zwischenring (7) innerhalb des Spieles (8, 9) elastisch verformbar ist.

2. Lagerung nach Anspruch 1, dadurch gekennzeichnet, dass der Zwischenring (7) aus Stahl besteht und jeweils auf der inneren und äusseren Lagerfläche (10, 11) dünnschichtige, harte und verschleissfeste Zonen (12, 13) aufweist.

3. Lagerung nach Anspruch 1 und 2, dadurch gekennzeichnet, dass die Zonen (12, 13) des Zwischenringes (7) gas- oder plasmanitriert sind.

4. Lagerung nach einem der Ansprüche 1 bis 3, dadurch gekennzeichnet, dass die Zonen (12, 13) des Zwischenringes (7) aus einer verchromten oder vernickelten Oberflächenbeschichtung bestehen.

5. Lagerung nach einem der Ansprüche 1 bis 4, dadurch gekennzeichnet, dass die Gehäuselagerfläche (5) gegenüber der Oberfläche des Lagerzapfens (3) eine höhere Härte aufweist.

## Claims

1. Bearing system for a belt feed driving pinion of an automatic gas pressure loader barrel weapon with a front (1) and a rear (2) bearing point (1, 2) positioned in the belt feed housing (14), characterised by the fact that at least one bearing point (1, 2) contains between a bearing journal (3) of the driving pinion (4) and a housing bearing surface (5), an intermediate ring (7) which slips in the peripheral direction, a radial clearance (8, 9) being provided respectively between the internal diameter ($d_2$) of the intermediate ring (7) and the diameter ($d_1$) of the bearing journal (3) and between the diameter ($d_4$) of the housing bearing surface (5), the intermediate ring (7) being elastically deformable within the clearance (8, 9).

2. Bearing system in accordance with Claim 1, characterised by the fact that the intermediate ring (7) comprises steel and has thin-layer, hard, wear-resisting zones (12, 13) on the inner and outer bearing surface (10, 11) respectively.

3. Bearing system in accordance with Claim 1 and 2, characterised by the fact that the zones (12, 13) of the intermediate ring (7) are gas- or plasma-nitrided.

4. Bearing system in accordance with one of claims 1 to 3, characterised by the fact that the zones (12, 13) of the intermediate ring (7) comprise a chromium-plated or nickel-plated surface coating.

5. Bearing system in accordance with one of claims 1 to 4, characterised by the fact that the housing bearing surface (5) has a higher degree of hardness than the surface of the bearing journal (3).

## Revendications

1. Dispositif à coussinets d'un pignon d'alimentation pour chargeur à bande d'une arme à canon actionnée par gaz, comprenant un coussinet avant (1) et un coussinet arrière (2) disposés dans le boîtier (14) du chargeur à bande, caractérisé en ce qu'au moins un coussinet (1, 2) comprend entre un tourillon d'appui (3) du pignon d'alimentation (4) et une surface d'appui (5) du boîtier un anneau intermédiaire (7) qui glisse en direction périphérique (6), un jeu radial (8, 9) étant présent entre le diamètre interne $d_2$ de l'anneau intermédiaire (7) et le diamètre $d_1$ du tourillon d'appui (3) et entre le diamètre externe $d_3$ de l'anneau intermédiaire (7) et le diamètre $d_4$ de la surface d'appui (5) du boîtier, et l'anneau intermédiaire (7) pouvant se déformer élastiquement à l'intérieur du jeu (8, 9).

2. Coussinet selon la revendication 1, caractérisé en ce que l'anneau intermédiaire est constitué en acier et comprend respectivement sur les surfaces d'appui interne et externe (10, 11) des zones à couche mince, dures et résistantes à l'usure (12, 13).

3. Coussinet selon les revendications 1 et 2, caractérisé en ce que les zones (12, 13) de l'anneau intermédiaire (7) sont nitrées au gaz ou au plasma.

4. Coussinet selon l'une quelconque des revendications 1 à 3, caractérisé en ce que les zones (12, 13) de l'anneau intermédiaire (7) sont constituées par une couche de surface chromée ou nickelée.

5. Coussinet selon les revendications 1 à 4, caractérisé en ce que la surface d'appui (5) du boîtier présente une dureté plus élevée que celle de la surface du tourillon d'appui (3).

FIG.1

FIG.2